# EUROPÄISCHE PATENTSCHRIFT

(11) **EP 0 648 711 B1**
(45) Veröffentlichungstag und Bekanntmachung des Hinweises auf die Patenterteilung: **28.07.1999**
(21) Anmeldenummer: 94113277.1
(22) Anmeldetag: 25.08.1994
(51) Int. Cl.: C02F 1/32, B01J 19/12

(54) **Vorrichtung zur Behandlung von Flüssigkeiten insbesondere mittels UV-Strahlung**
Apparatus for treating liquids, in particular with UV radiation
Appareil pour le traitement de liquides, notamment par rayonnement UV

(30) Priorität: 19.10.1993 DE 4335546
(43) Veröffentlichungstag der Anmeldung: 19.04.1995
(73) Patentinhaber: Norddeutsche Seekabelwerke GmbH, 26954 Nordenham (DE)
(72) Erfinder: Hanschen, Manfred, Dr., D-26954 Nordenham (DE); Schulz, Eckehard, D-26954 Nordenham (DE)
(74) Vertreter: Möller, Friedrich, Dipl.-Ing.

(56) Entgegenhaltungen:
- EP-A- 0 467 465
- DE-A- 4 225 631
- US-A- 3 061 721
- US-A- 4 922 114

## Beschreibung

Die Erfindung betrifft eine Vorrichtung zur Behandlung von Flüssigkeiten durch Bestrahlen mit insbesondere UV-Strahlen nach dem Oberbegriff des Anspruchs 1.

Zur Behandlung von verunreinigten Flüssigkeiten ist es bekannt, diese Flüssigkeiten zu bestrahlen. Dabei finden vor allem ultraviolette Strahlen (UV-Strahlen) Verwendung, die unerwünschte organische Verunreinigungen durch Oxidation beseitigen.

Bei bekannten Vorrichtungen erfolgt eine Behandlung der Flüssigkeiten in vorzugsweise mehreren Behandlungsstrecken. Die DE-A-42 25 631 zeigt eine derartige Vorrichtung. Die zu behandelnde Flüssigkeit wird nacheinander durch die einzelnen Behandlungsstrecken geleitet. Die Behandlungsstrecken sind üblicherweise als längliche Rohre ausgebildet, die über ein Außenrohr oder dergleichen und ein Innenrohr kleineren Durchmessers verfügen. Zwischen dem Außenrohr und dem Innenrohr wird ein Behandlungsraum mit einem vorzugsweise ringförmigen Querschnitt geschaffen, durch den die behandelnde Flüssigkeit hindurchströmt. Das Innenrohr ist lichtdurchlässig ausgebildet. Im Inneren des Innenrohrs befindet sich eine Strahlungsquelle, insbesondere eine UV-Strahlen ausstrahlende Lampe. Durch das lichtdurchlässige Innenrohr wird die zu behandelnde Flüssigkeit mit den im Innenrohr erzeugten UV-Strahlen beaufschlagt.

Grundsätzlich besteht die Gefahr, daß insbesondere die Innenrohre aufgrund von festsitzenden Verunreinigungen ausgetauscht werden müssen. Zu diesem Zweck muß die bekannte Vorrichtung gemäß der DE-A-42 25 631 insgesamt außer Betrieb gesetzt werden. Gleiches gilt für Reparatur- bzw. Wartungsarbeiten an einzelnen Behandlungsstrecken.

Hiervon ausgehend liegt der Erfindung die Aufgabe zugrunde, eine Vorrichtung zur Behandlung von Flüssigkeiten zu schaffen, bei der insbesondere Reinigungsarbeiten, Wartungen oder Reparaturen ohne eine nennenswerte Beeinträchtigung des Betriebs der Vorrichtung durchführbar sind.

Eine zur Lösung dieser Aufgabe dienende Vorrichtung weist die Merkmale des Anspruchs 1 auf. Dadurch, daß einzelne Behandlungsstrecken oder Gruppen mehrerer Behandlungsstrecken derart überbrückbar und/oder absperrbar sind, daß nur noch offene Behandlungsstrecken durchströmbar sind, ist es möglich, während des Betriebs der Vorrichtung einzelne Behandlungsstrecken oder Gruppen mehrerer Behandlungsstrecken stillzusetzen. Vorzugsweise sind dazu die Behandlungsstrecken absperrbar.

Die abgesperrten bzw. stillgesetzten Behandlungsstrecken können dadurch zu Reinigungs-, Reparatur- oder Wartungszwecken während des Betriebs der Vorrichtung demontiert und wieder montiert werden.

Verbunden sind die einzelnen Behandlungsstrecken mit den Enden durch Verbindungsstrecken. Vorzugsweise sind die Behandlungsstrecken mit den Verbindungsstrecken lösbar verbunden, so daß einzelne Behandlungsstrecken leicht montiert und demontiert werden können.

Die Verbindungsstrecken sind absperrbar. Dadurch lassen sich die Behandlungsstrecken zur Außerbetriebnahme vollständig von der zu behandelnden Flüssigkeit isolieren. Die Absperrung der Behandlungsstrecken erfolgt vorzugsweise durch in den Verbindungsstrecken angeordnete Absperrorgane, die als Sperr- oder Wegeventile ausgebildet sein können.

Vorzugsweise sind alle Behandlungsstrecken mit Abstand parallelverlaufend nebeneinander angeordnet. Gruppen von zwei Behandlungsstrecken sind jeweils an ihren auf einer Seite liegenden Enden durch einen Überströmkanal verbunden. Ein solcher Überströmkanal und die beiden ihm zugeordneten Behandlungsstrecken bilden dadurch einen U-förmig verlaufenden Strömungsweg für die zu behandelnde Flüssigkeit. Die von den Überströmkanälen weggerichteten Enden aller Behandlungsstrekken, nämlich ein Zulauf jeder Gruppe aus zwei Behandlungsstrekken und ein Ablauf einer solcher Gruppe, sind mit einem durchgehenden Verbindungskanal verbunden. In diesem Verbindungskanal befinden sich ebenfalls Absperrorgane, und zwar zwischen den beiden Behandlungsstrecken jeder Gruppe. Werden diese Absperrorgane geschlossen und die darüber hinaus vor jedem Zufluß und jedem Abfluß der Behandlungsstrecken angeordneten weiteren Absperrorgane geöffnet, läuft die zu behandelnde Flüssigkeit zickzackförmig durch alle Gruppen aus jeweils zwei Behandlungsstrecken. Infolge einer solchen Kombination der Absperrorgane ist es möglich, beliebige Behandlungsstrecken oder beliebige Gruppen von Behandlungsstrecken zu Reinigungs-, Wartungs- oder Reparaturzwecken zu überbrücken oder abzusperren. Alternativ ist es denkbar, einzelne Behandlungsstrecken oder Gruppen von Behandlungsstrecken mit jeweils einem vorzugsweise parallellaufenden Bypass zu versehen. Solche Bypässe ermöglichen eine beliebige Relativanordnung und Schaltung der Behandlungsstrekken. Gegebenenfalls können die Bypässe oder einzelne Bypässe auch durch zusätzliche Behandlungsstrecken gebildet sein. Die Bypässe bilden dann redundante Behandlungsstrecken.

Eine bevorzugte Ausführungsform der erfindungsgemäßen Vorrichtung wird nachfolgend anhand der Zeichnung näher erläutert. In dieser zeigen:
- Fig. 1: eine Teilansicht der Vorrichtung in einem Längsschnitt,
- Fig. 2: eine vergrößert dargestellte Einzelheit aus der Fig. 1 im Bereich einer Gruppe aus zwei Behandlungsstrecken,
- Fig. 3: einen gegenüber der Fig. 2 um 90° versetzten Längsschnitt durch eine Behandlungsstrecke, und
- Fig. 4: einen Schnitt IV-IV durch die Behandlungsstrecke gemäß der Fig. 3.

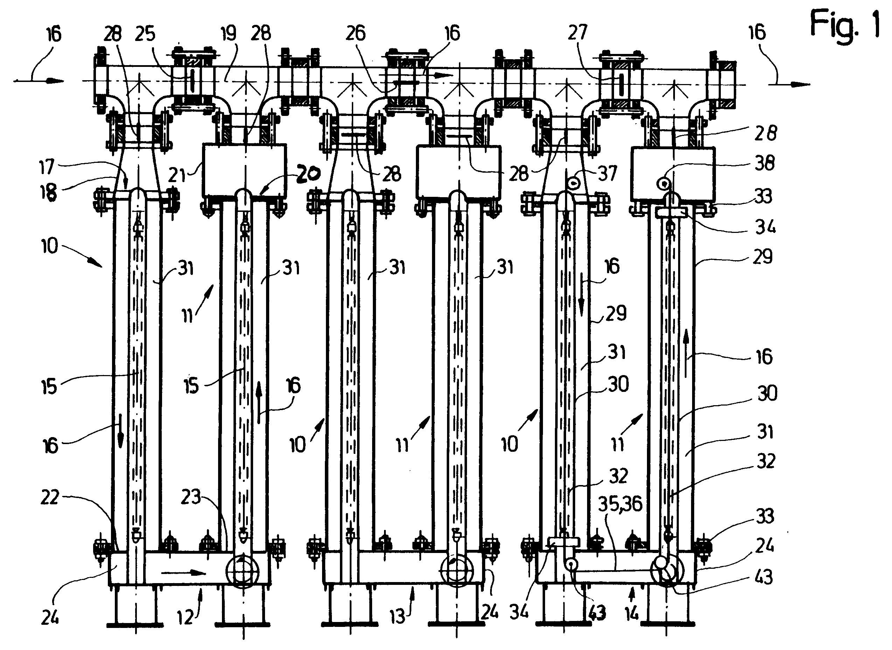

Die hier gezeigte Vorrichtung dient zur Oxidationsbehandlung von organisch verunreinigten Flüssigkeiten durch ultraviolette Strahlen (UV-Strahlen). Der in den Figuren gezeigte Teil der Vorrichtung verfügt über sechs Behandlungsstrecken 10 und 11. Alle Behandlungsstrecken 10 und 11 sind etwa gleich ausgebildet. Jeweils zwei Behandlungsstrecken 10 und 11 bilden eine Gruppe. In der Fig. 1 sind drei Gruppen 12, 13 und 14 aus jeweils zwei Behandlungsstrecken 10 und 11 dargestellt. Die Vorrichtung kann darüber hinaus weitere nicht gezeigte Gruppen aus mehreren Behandlungsstrecken aufweisen. Alle Behandlungsstrecken 10 und 11 liegen im gezeigten Ausführungsbeispiel mit Abstand nebeneinander, derart, daß ihre Längsmittelachsen 15 mit Abstand parallel zueinander verlaufen. Die Abstände der Längsmittelachsen 15 aller Behandlungsstrecken 10 und 11 sind etwa gleich groß.

Alle Behandlungsstrecken 10 und 11 sind in Reihe geschaltet und an ihren Enden miteinander verbunden, so daß die zu behandelnde Flüssigkeit zickzackförmig nacheinander durch alle Behandlungsstrecken 10, 11 in der durch Pfeile gekennzeichneten Flußrichtung 16 hindurchströmt. Alle Zulaufenden 17 der Behandlungsstrecken 10 jeder Gruppe 12, 13, 14 sind durch einen Anschlußkanal 18 mit einer gemeinsamen, durchgehenden Verbindungsstrecke, die als Verbindungskanal 19 ausgebildet ist, verbunden. Ebenso sind die Ausflußenden 20 jeder Behandlungsstrecke 11 der Gruppen 12, 13 und 14 über einen Anschlußkanal 21 mit dem Verbindungskanal 19 verbunden. Die Behandlungsstrecken 10 und 11 jeder Gruppe 12, 13 und 14 sind an ihren vom Zulaufende 17 und vom Ausflußende 20 weggerichteten Enden 22 und 23 durch eine weitere Verbindungsstrecke, nämlich einen Überströmkanal 24, miteinander verbunden.

Der Verbindungskanal 19 weist pro Gruppe 12, 13 und 14 ein bei Bedarf zu schließendes Absperrorgan 25, 26 und 27 auf. Die Absperrorgane 25, 26 und 27 sind im Verbindungskanal 19 jeweils zwischen den Behandlungsstrecken 10 und 11 einer jeden Gruppe 12, 13 und 14 positioniert. Des weiteren sind Absperrorgane 28 vor dem Zulaufende 17 jeder Behandlungsstrecke 10 und hinter dem Ausflußende 20 jeder Behandlungsstrecke 11 angeordnet. Die Absperrorgane 28 befinden sich im Bereich der Verbindung des jeweiligen Anschlußkanals 18 bzw. 21 mit dem Verbindungskanal 19.

Wenn alle Behandlungsstrecken 10 und 11 sich in Betrieb befinden, sind die im Verbindungskanal 19 angeordneten Absperrorgane 25, 26 und 27 geschlossen. Demgegenüber sind alle zwischen dem Verbindungskanal 19 und den Behandlungsstrecken 10 und 11 angeordneten Absperrorgane 28 geöffnet. Es fließt dann die zu behandelnde Flüssigkeit zickzackförmig durch die Vorrichtung, indem die Flüssigkeit nacheinander alle Behandlungsstrecken 10 und 11 durchströmt. Bei der Darstellung in der Fig. 1 sind beide Behandlungsstrecken 10 und 11 der zweiten Gruppe 13 am Zulaufende 17 und Ausflußende 20 durch zwei Absperrorgane 28 geschlossen. Des weiteren ist das Absperrorgan 26 zwischen der Behandlungsstrecke 10 und 11 der Gruppe 13 geöffnet. Auf diese Weise sind die Behandlungsstrecken 10 und 11 der Gruppe 13 überbrückt, indem die zu behandelnde Flüssigkeit zunächst die Behandlungsstrecken 10 und 11 der (ersten) Gruppe 12 durchströmt und dann - an den Behandlungsstrecken 10 und 11 der Gruppe 13 vorbei - die Behandlungsstrecken 10 und 11 der (dritten) Gruppe 14 durchströmt. Die Behandlungsstrecken 10 und 11 der (zweiten) Gruppe 13 sind auf diese Weise abgesperrt, so daß sie zu Reparatur- oder Wartungszwecken demontiert werden können. Nach dem gleichen Prinzip können zu Reparatur- oder Wartungsarbeiten die Gruppen 12, 14 und gegebenenfalls weitere nicht gezeigte Gruppen der Vorrichtung allein oder zusammen außer Betrieb gesetzt werden.

Die Behandlungsstrecken 10 und 11 verfügen allesamt über den gleichen Aufbau. Sie sind rohrförmig ausgebildet und setzen sich jeweils aus einem vorzugsweise lichtundurchlässigen, zylindrischen Außenrohr 29 und einem lichtdurchlässigen Innenrohr 30 zusammen. Das Innenrohr 30 ist ebenfalls zylindrisch ausgebildet. Es ist konzentrisch zum im Durchmesser größeren Außenrohr 29 angeordnet. Zwischen dem Innenmantel des Außenrohrs 29 und dem Außenmantel des Innenrohrs 30 entsteht auf diese Weise ein im Querschnitt ringförmiger Behandlungsraum 31, durch den die zu behandelnde Flüssigkeit hindurchströmt. Im Innenrohr 30 ist eine Strahlungsquelle angeordnet, die im gezeigten Ausführungsbeispiel als längliche UV-Lampe 32 ausgebildet ist. Die UV-Lampe 32 erstreckt sich nahezu über die gesamte Länge des Innenrohrs 30, so daß aus dem lichtdurchlässigen Innenrohr 30 über nahezu die gesamte Länge UV-Strahlen austreten zur Oxidation der zu behandelnden Flüssigkeit. Die Behandlungsstrecken 10 und 11 sind an den Enden des jeweiligen Außenrohrs 29 lösbar und flüssigkeitsdicht mit dem Überströmkanal 24 einerseits und den Anschlußkanälen 21 und 18 andererseits verbunden, und zwar im gezeigten Ausführungsbeispiel durch Flanschverbindungen 33 verschraubt.

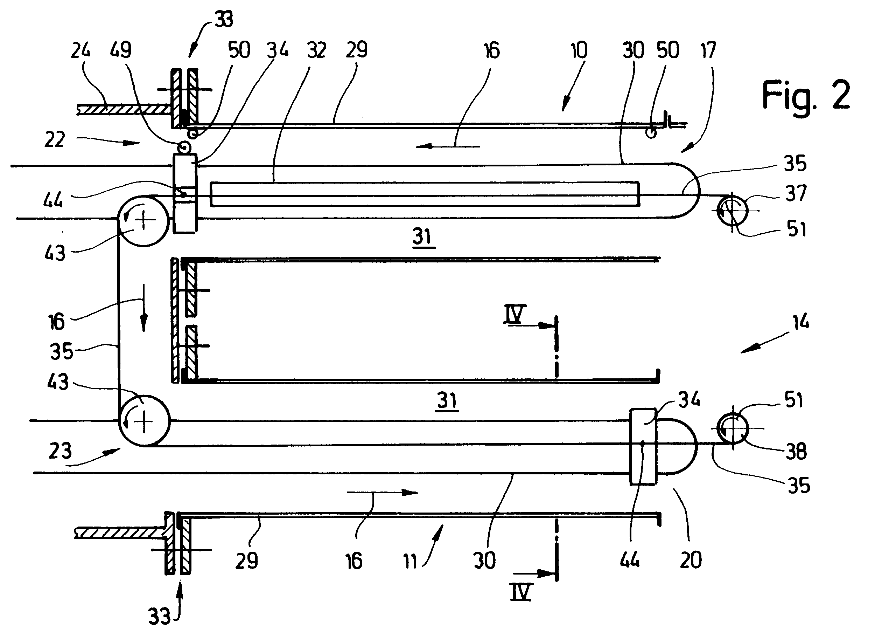

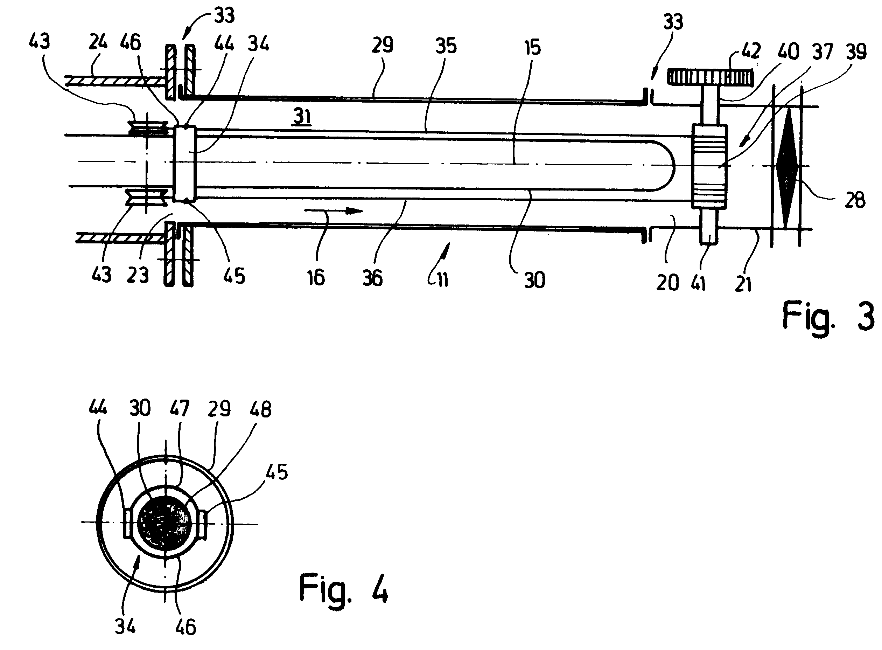

Jede Behandlungsstrecke 10 und 11 ist mit einer an sich gleichermaßen ausgebildeten Reinigungseinrichtung versehen. Die Reinigungseinrichtung ist schematisch in der Fig. 1 dargestellt, und zwar aus Gründen der Vereinfachung der Darstellung nur im Zusammenhang mit der (dritten) Gruppe 14. Die übrigen Gruppen 12 und 13 weisen gleiche Reinigungseinrichtungen auf. Detailliert ist die Reinigungseinrichtung in den Fig. 2 und 4 dargestellt.

Die Reinigungseinrichtung verfügt über ein Reinigungsorgan auf jedem Innenrohr 30. Die Reinigungsorgane sind im gezeigten Ausführungsbeispiel als Reinigungsringe 34 ausgebildet. Erfindungsgemäß sind die Reinigungsringe 34 derart bemessen, daß sie den ringförmigen Querschnitt der Behandlungsräume 31 nur teilweise ausfüllen. Dazu ist der Außendurchmesser jedes Reinigungsrings 34 kleiner als der Innendurchmesser des entsprechenden Außenrohrs 29. Jeweils ein Reinigungsring 34 ist auf dem Außenmantel des entsprechenden Innenrohrs 30 dichtend gelagert, und zwar derart, daß der Reinigungsring 34 in Richtung der Längsmittelachse 15 der jeweiligen Behandlungsstrecke 10 und 11 auf dem Innenrohr 30 hin- und herbewegbar ist. Hierbei wird infolge der dichtenden Anordnung des Reinigungsrings 34 auf dem Innenrohr 30 der Außenmantel desselben gesäubert, indem auf dem Außenmantel des Innenrohrs 30 sich abgesetzter Schmutz während der Hin- und Herbewegung des Reinigungsrings 34 abgestreift wird.

Die Reinigungsringe 34 werden mechanisch auf den Innenrohren 30 hin- und herbewegt. Dazu dienen Zugmittel, die im gezeigten Ausführungsbeispiel durch zwei parallelgeführte Seile 35 und 36 eines Seiltriebs gebildet sind. Die beiden Seile 35 und 36 eines Seiltriebs dienen zum gleichzeitigen Entlangbewegen zweier Reinigungsringe 34 auf den Innenrohren 30 der Behandlungsstrecke 10 und 11 jeweils einer Gruppe 12, 13 und 14. Beide Seile 35 und 36 sind mit ihren gegenüberliegenden Enden einem Seilantrieb 37 und 38 zugeordnet. Die Seilantriebe 37 und 38 befinden sich in Flußrichtung 16 der zu behandelnden Flüssigkeit gesehen vor dem Zulaufende 17 der Behandlungsstrecke 10 und hinter dem Ausflußende 20 der Behandlungsstrecke 11. Dazu sind im gezeigten Ausführungsbeispiel die Seilantriebe 37 und 38 im Anschlußkanal 18 bzw. 21 gelagert. Jeder Seilantrieb 37 und 38 verfügt über eine Seiltrommel 39 für beide Seile 35 und 36, die mit gegenüberliegenden Wellen 40 und 41 dichtend durch die Wandung des Anschlußkanals 18 bzw. 21 hindurchgeführt und hierin gelagert sind. Der Welle 40 ist ein außerhalb des Anschlußkanals 18 bzw. 21 liegendes Antriebsrad 42 zugeordnet, das mit einem nicht gezeigten Antrieb in Verbindung steht.

Im Bereich des jeweiligen Überströmkanals 24 erfolgt eine Umlenkung der Seile 35 und 36 durch nicht angetriebene Umlenkräder 43. Im Bereich des Endes 22 der Behandlungsstrecke 10 und des Endes 23 der Behandlungsstrecke 11 sind jeweils zwei Umlenkräder 43, jeweils für eines der Seile 35 und 36, vorgesehen. Die Seile 35 und 36 werden durch die Umlenkräder 43 vom Ende 22 der Behandlungsstrecke 10 durch den Überströmkanal 24 hindurch zum Ende 23 der Behandlungsstrecke 11 geführt (Fig. 2).

Die Seile 35 und 36 sind über Anlenkpunkte 44 und 45 mit gegenüberliegenden Seiten des Außenumfangs 46 des jeweiligen Reinigungsrings fest verbunden (Fig. 4).

Die Reinigungsringe 34 bestehen aus einer äußeren Einfassung 47, an der die Anlenkpunkte 44 und 45 für die Seile 35 und 36 befestigt sind, und einem in der Einfassung 47 gehaltenen Abstreiferring 48. Der Abstreiferring 48 besteht aus einem elastischen Material, das sich vollständig, nämlich umlaufend, an den Außenmantel des Innenrohrs 30 anlegt und sich an die Gestalt des Innenrohrs 30 anpaßt. Die elastischen Materialeigenschaften des Abstreiferrings 48 sind derart gewählt, daß er mit ausreichender Kraft die Verschmutzungen von der Außenfläche des Innenrohrs 30 löst.

Bei der hier gezeigten Reinigungsvorrichtung ist einem der beiden vom gleichen Seiltrieb angetriebenen Reinigungsringe 34 ein Signalmittel 49 zugeordnet. Dieses befindet sich gemäß der Fig. 2 an der Außenseite der Einfassung 47. An den beiden gegenüberliegenden Enden des Außenrohrs 29 der Behandlungsstrecke 10 mit dem das Signalmittel 49 aufweisenden Reinigungsring 34 ist jeweils ein weiteres Signalmittel 50 angeordnet. Die Signalmittel 49 und 50 korrespondieren derart miteinander, daß die Seilantriebe 37 und 38 in ihrer Antriebsrichtung umgesteuert werden, wenn das Signalmittel 49 am Reinigungsring 34 dem festen Signalmittel 50 an einem Ende der Behandlungsstrecke 10 gegenüberliegt. Alternativ ist es denkbar, entsprechende Signalmittel direkt den Seilantrieben 37 und 38, beispielsweise der Seiltrommel 39, zuzuordnen. Durch die Signalmittel 49 und 50 wird sichergestellt, daß die Reinigungsringe 34 nur längs der gesamten Behandlungsstrecke 10 und 11 auf den Innenrohren 30 hinund herbewegt werden.

Mit der vorstehend beschriebenen Reinigungseinrichtung werden die beiden Reinigungsringe 34 auf den Behandlungsstrecken 10 und 11 einer jeden Gruppe 12, 13 oder 14 synchron hin- und herbewegt, und zwar entweder gegen die Flußrichtung 16 der zu behandelnden Flüssigkeit oder in Flußrichtung 16. Da die Reinigungsringe 34 den Querschnitt der Behandlungsräume 31 nur teilweise ausfüllen, ist während der Hin- und Herbewegung der Reinigungsringe 34 auf den Innenräumen 30 eine Weiterbehandlung der Flüssigkeit möglich, indem diese insbesondere dann, wenn die Reinigungsringe 34 gegen die Flußrichtung 16 zurückbewegt werden, die zu behandelnde Flüssigkeit im Bereich des freien Querschnitts des Behandlungsraums 31 an den Reinigungsringen 34 vorbeiströmen kann. Zur Reinigung der Außenwände der Innenrohre 30 müssen deshalb Behandlungsstrecken 10 und 11 nicht außer Betrieb gesetzt werden. Werden die Reinigungsringe 34 in Richtung der Pfeile 51 in der Fig. 2 bewegt, wird hierzu nur der Seilantrieb 38 angetrieben, so daß die Seile 35 und 36 beide Reinigungsringe 34 gleichzeitig auf den Innenrohren 30 entlangziehen. Haben die Reinigungsringe 34 zwei entgegengesetzte Enden der Behandlungsstrecken 10 und 11 erreicht, wie dies die Fig. 2 darstellt, werden die Signalmittel 49 und 50 aktiviert und dadurch der Antrieb umgesteuert, indem nunmehr nur der Seilantrieb 37 die Reinigungsringe 34 gegen die Flußrichtung 16 zurückzieht zu den gegenüberliegenden Enden der beiden Behandlungsstrecken 10 und 11.

In vorstehend beschriebener Weise kann die Reinigung der Behandlungsstrecken 10 und 11 sowohl permanent hin- und hergehend als auch in Intervallen, also mit zwischenzeitlichen Pausen, erfolgen. Während dieser Reinigung findet ununterbrochen eine Behandlung der Flüssigkeit statt.

## Patentansprüche

1. Vorrichtung zur Behandlung von Flüssigkeiten durch Bestrahlen mit insbesondere UV-Strahlen, mit mehreren, aufeinanderfolgenden und durch Verbindungsstrecken (19) verbundenen, jeweils zur Bestrahlung dienenden Behandlungsstrecken (10, 11), wobei jede Behandlungsstrecke (10, 11) aus einem Außenrohr (29) und einem Innenrohr (30) kleineren Durchmessers besteht, zur Bildung von Behandlungsräumen (31) zwischen der Außenwandung des Innenrohres (30) und der Innenwandung des Außenrohres (29), durch die die Flüssigkeiten nacheinander hindurchleitbar sind, wobei im Innenrohr (30) mindestens eine Strahlungsquelle angeordnet ist, **dadurch gekennzeichnet**, daß einzelne Behandlungsstrecken (10, 11) oder Gruppen (12, 13, 14) mehrerer Behandlungsstrecken (10, 11) derart überbrückbar und/oder absperrbar sind, daß nur noch offene Behandlungsstrecken (10, 11) durchströmbar sind.

2. Vorrichtung nach Anspruch 1, dadurch gekennzeichnet, daß die Behandlungsstrecken (10, 11) oder Gruppen (12, 13, 14) mehrerer Behandlungsstrecken (10, 11) einzeln oder zusammen überbrückbar und/oder absperrbar sind.

3. Vorrichtung nach Anspruch 1 oder 2, dadurch gekennzeichnet, daß die Verbindungsstrecken und/oder Zulaufenden (17) bzw. Ausflußenden (20) der Behandlungsstrecken (10, 11) mit Absperrorganen (25, 26, 27, 28) versehen sind.

4. Vorrichtung nach Ansprüche 1 bis 3, dadurch gekennzeichnet, daß zueinandergerichtete Enden (22, 23) zweier Behandlungsstrecken (10, 11) durch einen Überströmkanal (24) zu einer Gruppe (12, 13, 14) verbunden sind.

5. Vorrichtung nach einem oder mehreren der Ansprüche 1 bis 4, dadurch gekennzeichnet, daß Zulaufenden (17) und Ausflußenden (20) der Behandlungsstrecken (10, 11) jeder Gruppe (12, 13, 14) durch einen Verbindungskanal (19) miteinander verbunden sind.

6. Vorrichtung nach Anspruch 5, dadurch gekennzeichnet, daß der Verbindungskanal (19) zwischen dem Zulaufende (17) und dem Ausflußende (20) jeder Gruppe (12, 13, 14) zweier Behandlungsstrecken (10, 11) ein Absperrorgan (25, 26, 27) aufweist.

7. Vorrichtung nach einem oder mehreren der Ansprüche 1 bis 6, dadurch gekennzeichnet, daß in den Bereichen der Zulaufenden (17) und der Ausflußenden (20) jeder Behandlungsstrecke (10, 11) ein Absperrorgan (28) angeordnet ist.

8. Vorrichtung nach einem oder mehreren der Ansprüche 1 bis 7, dadurch gekennzeichnet, daß die Behandlungsstrecken (11, 12) lösbar mit den Anschlußkanälen (18, 21) und den Überströmkanälen (24) verbunden sind.

9. Vorrichtung nach einem oder mehreren der Ansprüche 1 bis 8, dadurch gekennzeichnet, daß jede Behandlungsstrecke (10, 11) oder jede Gruppe (12, 13, 14) mehrerer Behandlungsstrecken (10, 11) mit einem vorzugsweise absperrbaren Bypass versehen ist.

10. Vorrichtung nach Anspruch 9, dadurch gekennzeichnet, daß beide Enden der Behandlungsstrecken (10, 11) bzw. Gruppen (12, 13, 14) von Behandlungsstrecken (10, 11) mit einem Absperrorgan, insbesondere einem 2/3-Wegeventil zum wahlweisen Freigeben des Durchflusses durch den Bypass oder die Behandlungsstrecke (10, 11) bzw. Behandlungsstrecken (10, 11), versehen sind.

## Claims

1. Apparatus for the treatment of liquids by irradiation with, in particular, UV rays, having a plurality of successive treatment stages (10, 11) connected by connecting stages (19) and each serving for irradiation, each treatment stage (10, 11) consisting of an outer tube (29) and of an inner tube (30) of smaller diameter, for the formation of treatment spaces (31) between the outer wall of the inner tube (30) and the inner wall of the outer tube (29), through which treatment spaces the liquids can be conveyed in succession, at least one radiation source being arranged in the inner tube (30), characterized in that individual treatment stages (10, 11) or groups (12, 13, 14) of a plurality of treatment stages (10, 11) can be bypassed and/or shut off in such a way that the liquid can flow only through treatment stages (10, 11) which are still open.

2. Apparatus according to Claim 1, characterized in that the treatment stages (10, 11) or groups (12, 13, 14) of a plurality of treatment stages (10, 11) can be bypassed and/or shut off individually or together.

3. Apparatus according to Claim 1 or 2, characterized in that the connecting stages and/or the inflow ends (17) or outflow ends (20) of the treatment stages (10, 11) are provided with shut-off members (25, 26, 27, 28).

4. Apparatus according to Claims 1 to 3, characterized in that those ends (22, 23) of two treatment stages (10, 11) which are directed towards one another are connected by means of an overflow duct (24) so as to form a group (12, 13, 14).

5. Apparatus according to one or more of Claims 1 to 4, characterized in that inflow ends (17) and outflow ends (20) of the treatment stages (10, 11) of each group (12, 13, 14) are connected to one another by means of a connecting duct (19).

6. Apparatus according to Claim 5, characterized in that the connecting duct (19) has a shut-off member (25, 26, 27) between the inflow end (17) and the outflow end (20) of each group (12, 13, 14) of two treatment stages (10, 11).

7. Apparatus according to one or more of Claims 1 to 6, characterized in that a shut-off member (28) is arranged in the regions of the inflow ends (17) and of the outflow ends (20) of each treatment stage (10, 11).

8. Apparatus according to one or more of Claims 1 to 7, characterized in that the treatment stages (11, 12) are releasably connected to the junction ducts (18, 21) and the overflow ducts (24).

9. Apparatus according to one or more of Claims 1 to 8, characterized in that each treatment stage (10, 11) or each group (12, 13, 14) of a plurality of treatment stages (10, 11) is provided with a bypass preferably capable of being shut off.

10. Apparatus according to Claim 9, characterized in that both ends of the treatment stages (10, 11) or groups (12, 13, 14) of treatment stages (10, 11) are provided with a shut-off member, in particular a 2/3-way valve, for the selective release of the flow through the bypass or the treatment stage (10, 11) or treatment stages (10, 11).

## Revendications

1. Dispositif de traitement de liquides par irradiation, en particulier avec des rayons UV, comportant plusieurs chemins de traitement (10, 11) servant respectivement à l'irradiation, se suivant les uns les autres et reliés au moyen de chemins de liaison (19), chaque chemin de traitement (10, 11) étant constitué d'un tube extérieur (29) et d'un tube intérieur (30) de plus petit diamètre, pour constituer des enceintes de traitement (31) entre la paroi extérieure du tube intérieur (30) et la paroi intérieure du tube extérieur (29), enceintes de traitement à travers la succession desquelles les liquides peuvent être passés, dans le tube intérieur (30) étant disposée au moins une source de rayonnement, caractérisé par le fait que les chemins de traitement (10, 11) individuels ou les groupes (12, 13, 14) de plusieurs chemins de traitement (10, 11) sont susceptibles d'être pontés et/ou isolés de manière à ce que l'écoulement ne puisse plus passer encore que par des chemins de traitement (10, 11) ouverts.

2. Dispositif selon la revendication 1, caractérisé par le fait que les chemins de traitement (10, 11) ou les groupes (12, 13, 14) de plusieurs chemins de traitement (10, 11) sont susceptibles d'être pontés et/ou isolés, individuellement ou conjointement.

3. Dispositif selon la revendication 1 ou 2, caractérisé par le fait que les chemins de liaison et/ou les extrémités d'amenée (17), respectivement les extrémités d'évacuation (20) des chemins de traitement (10, 11) sont dotés d'organes d'isolement (25, 26, 27, 28).

4. Dispositif selon les revendications 1 à 3, caractérisé par le fait que des extrémités (22, 23) tournées les unes vers les autres de deux chemins de traitement (10, 11) sont reliées au moyen d'un canal d'écoulement de franchissement (24) pour constituer un groupe (12, 13, 14).

5. Dispositif selon l'une ou plusieurs des revendications 1 à 4, caractérisé par le fait que les extrémités d'amenée (17) et les extrémités d'évacuation (20) des chemins de traitement (10, 11) de chaque groupe (12, 13, 14) sont reliées ensemble au moyen d'un canal de liaison (19).

6. Dispositif selon la revendication 5, caractérisé par le fait que le canal de liaison (19) présente un organe d'isolement (25, 26, 27), entre l'extrémité d'amenée (17) et l'extrémité d'évacuation (20) de chaque groupe (12, 13, 14) de deux chemins de traitement (10, 11).

7. Dispositif selon l'une ou plusieurs des revendications 1 à 6, caractérisé par le fait qu'un organe d'isolement (28) est disposé dans les zones des extrémités d'amenée (17) et des extrémités d'évacuation (20) de chaque chemin de traitement (10, 11).

8. Dispositif selon l'une ou plusieurs des revendications 1 à 7, caractérisé par le fait que les chemins de traitement (11, 12) sont reliés de façon désolidarisable aux canaux de raccordement (18, 21) et aux canaux d'écoulement de franchissement (24).

9. Dispositif selon l'une ou plusieurs des revendications 1 à 8, caractérisé par le fait que chaque chemin de traitement (10, 11) ou chaque groupe (12, 13, 14) de plusieurs chemins de traitement (10, 11) est doté d'une dérivation, de préférence pouvant être fermée.

10. Dispositif selon la revendication 9, caractérisé par le fait que les deux extrémités des chemins de traitement (10, 11) et/ou des groupes (12, 13, 14) de chemins de traitement (10, 11) sont dotées d'un organe d'isolement, en particulier d'une soupape multivoies de type 2/3, pour libérer au choix le flux à travers la dérivation ou le chemin de traitement (10, 11) et/ou les chemins de traitement (10, 11).
